# EUROPÄISCHE PATENTSCHRIFT

(11) **EP 0 295 505 B1**
(45) Veröffentlichungstag und Bekanntmachung des Hinweises auf die Patenterteilung: **04.05.1994**
(21) Anmeldenummer: 88108842.1
(22) Anmeldetag: 02.06.1988
(51) Int. Cl.: A47L 13/022, A47L 13/46, A47K 11/10, B08B 1/00

(54) **Arbeitsgerät zum Reinigen oder Bearbeiten von Oberflächen oder zum Auftragen von Medien auf Oberflächen**
Device for cleaning or treating surfaces or the application of substances to surfaces
Outil de nettoyage ou de traitement de surfaces ou pour mettre des objets sur des surfaces

(30) Priorität: 15.06.1987 DE 3719904
(43) Veröffentlichungstag der Anmeldung: 21.12.1988
(73) Patentinhaber: CORONET-Werke Gesellschaft mit beschränkter Haftung, 69483 Wald-Michelbach (DE)
(72) Erfinder: Weihrauch, Georg, D-6948 Wald-Michelbach/Odw. (DE)
(74) Vertreter: Lichti, Heiner, Dipl.-Ing.

(56) Entgegenhaltungen:
- FR-A- 932 572
- GB-A- 897 556
- US-A- 1 927 868
- US-A- 2 095 138
- US-A- 2 786 223
- US-A- 3 100 311
- US-A- 4 031 673
- US-A- 4 546 514

## Beschreibung

Die Erfindung betrifft ein Arbeitsgerät mit den Merkmalen des Oberbegriffs des Patentanspruchs 1.

Bei Arbeitsgeräten, insbesondere wenn sie zum Einsatz im Haushalt bestimmt sind, ist es bekannt, das eigentliche Arbeitsteil, das durch Verschmutzung, Verschleiß od. dgl. unbrauchbar und deshalb weggeworfen wird, auswechselbar an einem Halter anzubringen um diesen Halter stets wiederverwenden zu können. So ist beispielsweise ein Bodenreinigungsgerät in Form eines Mops bekannt (US-A-756 100), bei dem ein kissenartiges Tuch zwischen zwei scherenartig ausgebildeten Zangenarmen unter Bildung einer Falte im mittleren Bereich eingeklemmt wird, wobei der eine Zangenarm an einem üblichen Langstiel befestigt ist, während die andere Zange in der Klemmlage für das Mopkissen am Stiel eingerastet wird. Durch Lösen der Verrastung läßt sich das Moptuch lösen und gegebenenfalls reinigen bzw. bei Verschleiß durch ein neues ersetzen. Der Aufbau des zangenartigen Halters ist derart, daß nur flächige Kissen auf einer relativ großen Länge eingespannt werden können.

Weiterhin ist bei Haushaltsreinigungsgeräten, z.B. für Geschirr, bekannt (US-A-2 296 133, 3 100 311, 4 546 514, FR-A-2 153 309) knäuelartige Arbeitsteile, wie Schwämme, Topfreiniger aus Drahtgewirken od. dgl., an einem Halter anzubringen, der zwei oder mehr Greifer aufweist, die zwischen einer gespreizten Öffnungsstellung und einer geschlossenen Gebrauchslage bewegbar sind. In einem Fall (FR-A-2 153 309) sitzen die Greifer an einer Schubstange, die in einer griffartigen Hülse geführt ist. Mittels einer in der Hülse angeordneten Feder wird die Schubstange in eine obere Lage gedrängt, in der die Greifer aus der gespreizten Stellung in die geschlossene Gebrauchslage gelangen, wobei sie das knäuel- oder schwammartige Reinigungsteil erfassen. Beim Verschieben der Schubstange zum Öffnen der Greifer wirkt auf das Arbeitsteil zugleich ein an der Schubstange angeordneter Auswerfer. Bei der anderen bekannten Ausführung (US-A-2 296 133) sind eine Vielzahl von leistenartigen Greifern aus Metall an der unteren Stirnseite eines Griffs auf einem Umfangskreis schwenkbar gelagert. Durch Aufschieben auf das knäuelartige Reinigungsteil in Form eines Topfkratzers od. dgl. und anschließendes Verschieben eines sämtliche Greifer umschließenden Schieberings können die hakenförmigen Enden der Greifer in den Topfkratzer eindringen, um ihn am Griff zu fixieren.

Eine sehr vielfältige Entwicklung hat auf dem Gebiet der Toiletten-Reinigungsgeräte stattgefunden, um herkömmliche Toilettenbürsten durch Wegwerf-Arbeitsteile zu ersetzen und damit den hygienischen Anforderungen eher zu entsprechen. So ist es bekannt (DE-U-1 993 157, DE-U-76 25 294), tamponartige Reinigungskissen mittels an parallelen Führungen verschiebbarer Zangengreifer zu fixieren, wobei einer der Zangengreifer in einer Hülse unter Federkraft steht, die die Zangengreifer in die Schließstellung drängt, in der sie das tamponartige Reinigungskissen zwischen sich einklemmen. Bei einer anderen Ausführung mit wiederum zangenartigen Armen weist ein Arm eine Auflageplatte für ein speziell geformtes Reinigungskissen auf, das eine Aussparung an dem anderen konturengleichen Zangenarm durchgreift (EP-B-1-0 078 123). Bei einer anderen Ausführung (GB-A-651 454) ist ein mehrschichtiges Zellstoffkissen an einer Seite geschlitzt und wird auf ein stangenartiges Schiebeteil aufgesetzt und zwischen einer an diesem angeordneten Platte und einer weiteren Platte, die an einer das Schiebeteil führenden Hülse vorgesehen ist, eingespannt. Auch hier steht das Schiebeteil unter einer die Platten zusammenführenden Federkraft, die durch Druck auf eine Handhabe überwunden wird, um die Reinigungskissen in dem Schlitz aufnehmen zu können.

Das den Oberbegriff des Patentanspruchs 1 bildende Arbeitsgerät (US-A-2 786 223, US-A-4 031 673) besteht aus einer Hülse und einem darin verschiebbaren stangenartigen Schiebeteil. Die Hülse weist an ihrem einen Ende eine Öffnung auf, durch die die am Schiebeteil angebrachten Greifer nach außen ragen, während das Schiebeteil an dem gegenüberliegenden, die Hülse überragenden Ende eine Handhabe aufweist. Durch Druck auf die Handhabe wandern die Greifer aus der Hülse heraus. Da sie selbst federnd ausgebildet sind, werden sie dabei in eine Öffnungsstellung gespreizt. Durch Aufsetzen der Greifer auf das als Kissen ausgebildete Arbeitsteil und Ziehen an dem Schiebeteil verkrallen sich die Greifer in dem Kissen und werden in die Hülse eingezogen, wobei sie sich in ihre das Kissen fixierende Schließlage bewegen. Das Schließen läßt sich auch durch bloßen Druck auf die Hülse erreichen, die sich dann über die Greifer schiebt.

Aus der FR-A 932 572 ist ein Arbeitsgerät bekannt, das einen Bolzen aufweist, an dessen unterem Ende mehrere Greifer angeordnet sind. Auf den Bolzen ist eine konische Hülse aufsetzbar, an deren Innenseite sich die Greifer anlegen. Auf der Oberseite ist die Hülse mit einer Bohrung versehen, durch die der Bolzen unter Spiel hindurchgesteckt werden kann. Der Bolzen weist im oberen Bereich ein Gewinde auf, auf das ein stilartiger Handgriff aufschraubbar ist. Bei der Montage des Arbeitsgerätes ist es notwendig, das Arbeitsteil in die geöffneten Greifer einzuführen und die Hülse auf den Bolzen aufzuschieben, bis dieser mit seinem Gewindeabschnitt aus der Hülse hervorragt und die Greifer durch Anlage an der Innenseite an der Hülse in ihre Klemmstellung gebracht sind. In dieser Stellung müssen der Bolzen und die Hülse von dem Benutzer mit der einen Hand so lange festgehalten werden, bis mit der anderen Hand der stilartige Griff aufgeschraubt ist.

Unabhängig vom jeweiligen Anwendungszweck haben alle bekannten Arbeitsgeräte der zuvor geschilderten Art den Nachteil, daß entweder nur bestimmte Arten, nämlich kissen- oder knäuelförmige Arbeitsteile unmittelbar ergriffen werden können oder aber flächige, z.B. tuchartige Arbeitsteile erst in eine angepaßte Form gebracht werden müssen, um sie mittels des Arbeitsgerätes erfassen zu können. Darüber hinaus weisen die bekannten Arbeitsgerätes sämtlich einen konstruktiv aufwendigen Aufbau aus einer Vielzahl von Bauteilen auf.

Der Erfingung liegt die Aufgabe zugrunde, ein Arbeitsgerät der genannten Art dahingehend weiterzubilden, daß mit einem konstruktiv einfachen Aufbau eine variable Einstellung des Spreizwinkels der Greifer möglich ist, so daß Arbeitsteile, insbesondere Reinigungstücher, aus unterschiedlichen Materialien und unterschiedlicher Struktur problemlos aufgenommen und funktionssicher fixiert werden können.

Diese Aufgabe wird erfindungsgemäß dadurch gelöst, daß der Halter ausschließlich aus der Hülse und dem Schieberteil besteht und daß die Handhabe auf dem Schiebeteil zur Einstellung der Öffnungsweite der Greifer in der Öffnungsstellung axial verstellbar ist.

Das gesamte Arbeitsgerät besteht lediglich aus der Hülse und dem darin geführten Schieberteil, das die Greifer und die Handhabe aufweist, die zugleich zur variabeln Einstellung der Greiferweite dient.

Aufgrund der axialen Verstellbarkeit der Handhabe ist es inbesondere möglich, bei der Abnahme flächiger Arbeitsteile, z.B. Reinigungstüchern od.dgl., von einem Stapel den Umfang der Greiferbewegung einzustellen und damit die Anzahl der gleichzeitig vom Stapel gegriffenen Reinigungstücher zu bestimmen. Je weiter sich die Greifer öffnen, um so mehr flächige Reinigungstücher werden erfaßt. Umgekehrt können bei kleiner Öffnungsweite auch nur einzelne Reinigungstücher ergriffen werden. Bei knäuel- oder kissenförmigen Arbeitsteilen wird man eher eine größere Öffnungsweite der Greifer einstellen.

Aus der Öffnungsstellung können die Greifer durch Aufsetzen und Andrücken auf das Arbeitsteil selbsttätig in die Gebrauchslage gelangen, wobei das Schiebeteil in der Hülse verschoben wird. Es braucht also lediglich die Hülse ergriffen und über sie auf die Greifer ein Druck ausgeübt werden, um das Arbeitsteil in die fixierte Gebrauchslage zu verbringen. Umgekehrt werden die Greifer durch Druck auf das Schiebeteil in die Öffnungsstellung gebracht, so daß das Arbeitsteil freigegeben und durch ein neues ersetzt werden kann.

Vorzugsweise ist die Ausbildung so getroffen, daß die Greifer beim Andrücken mittels der Hülse das vorzugsweise flächige Arbeitsteil zwischen sich faltend zusammenschieben und die Falten in den Raum zwischen sich verdrängen.

Mit dieser Ausbildung ist es insbesondere möglich, auch flächige Arbeitsteile, wie Tücher aus Papier, Vlies, Gewebe od.dgl., durch Aufsetzen des Halters und Andrücken der Hülse selbsttätig zu erfassen und zwischen den Greifern zu fixieren. Damit ist es insbesondere möglich, solche flächigen Arbeitsteile auch vom Stapel abzunehmen.

Vorzugsweise sind wenigstens drei Greifer vorgesehen, die mit einem Bogenwinkel von jeweils 120° versetzt sind, so daß gegenüber nur flächigen oder nur zweiarmigen Greifern eine bessere Fixierung gegeben ist.

Wie an sich bekannt, sind die Greifer federnd ausgebildet und durch Einschieben in die Hülse mittels des Schiebeteils aus der Öffnungsstellung in die Gebrauchslage bewegbar, wobei diese Bewegung aber ausschließlich durch Andruck der Hülse auf das Arbeitsteil stattfindet.

Zweckmäßigerweise bestehen die Greifer aus einem bei ihrer Bewegung an der Innenwandung der Hülse geführten Greiferarm und nach innen oder außen gerichteten Klauen. Sind die Klauen nach innen gerichtet, so wird das Arbeitsteil zangenartig ergriffen. Weisen hingegen die Klauen nach außen, so können sie aus einer inneren Stellung nach außen gespreizt werden und ein von ihnen aufgenommenes flächiges Arbeitsteil gleichzeitig flächig spannen.

Um das selbsttätige Ergreifen zu erleichtern, sind die Klauen mit Vorteil so ausgebildet, daß die freien Enden in ihrer Öffnungsstellung nach unten weisen, während sie in der Gebrauchslage annähernd horizontal angeordnet sind. Durch diese nach unten geneigten Enden können die Klauen das flächige Arbeitsteil greifen und - je nach Bewegung der Greifer - den zwischen ihnen befindlichen Bereich faltend nach innen zusammenlegen oder nach außen spannen.

In bevorzugter Ausführung sind die Klauen bogenförmig ausgebildet, so daß sie annähernd auf einem Kreisbogen geführt sind. Damit wird einerseits ein Durchstechen oder Aufreißen flächiger Arbeitsteile vermieden, andererseits ein sicheres Erfassen gewährleistet.

In weiterer bevorzugter Ausführung ist vorgesehen, daß die wenigstens drei Greifer so ausgebildet sind, daß sie aus einer gespreizten Öffnungsstellung in eine geschlossene Gebrauchslage bewegbar sind, in der sie über die gesamte Greiferlänge einen annähernd geschlossenen Greiferkopf bilden. Diese Ausbildung empfiehlt sich insbesondere beim Einsatz von flächigen Reinigungstüchern als Reinigungskopf für Toiletten-Reinigungsgeräte.

Weiterhin ist von Vorteil, wenn die Hülse aus einem Rohr und das Schiebeteil aus einem darin satt anliegend geführten Rohr gebildet sind, das an seinem einen Ende verschlossen ist, an dem wiederum die Greifer angesetzt sind.

Auch diese Ausbildung ist insbesondere für Toiletten-Reinigungsgeräte von Vorteil, indem einerseits durch die geschlossene Ausbildung des Schiebeteils, andererseits durch dessen satte Führung in der rohrförmigen Hülse vermieden wird, daß Schmutz eindringen oder sich an den vorderen Teilen des Halters festsetzen kann.

Zur Erleichterung der Handhabung kann das die Hülse bildende Rohr an seinem oberen Ende zu einem Griffrohr erweitert sein. Dem gleichen Zweck dient die Maßnahmen, daß das Schiebeteil eine das Griffrohr übergreifende Kappe als Handhabe aufweist, die bei Anschlag an das Griffrohr die gespreizte Öffnungsstellung der Greifer bestimmt. Beim Aufsetzen und Andrücken der Hülse wandert die kappenartige Handhabe vom Griffrohr weg, während durch Druck auf die Handhabe in Richtung des Griffrohrs sich die Greifer öffnen und das Reinigungsteil ausgeworfen werden kann.

Zur weiteren Erleichterung der Handhabung können gegebenenfalls an der Hülse außenseitig Widerlager für die Finger einer Hand angeordnet sein.

In weiterer Ausgestaltung ist vorgesehen, daß die Hülse und das Schiebeteil zumindest auf einem unteren Teil ihrer Länge quer zu ihrer Achse biegsam sind. Diese Ausbildung hat den Vorteil, daß mittels des Halters durch entsprechendes Abbiegen zumindest auf der unteren Länge auch Stellen zugänglich sind, die nicht unmittelbar in der Flucht von Hülse und Schiebeteil liegen. So ergibt sich beispielsweise bei einem Toiletten-Reinigungsgerät der Vorteil, daß die Greifer bzw. das von ihnen gehaltene Reinigungsteil besser unter den Spülrand oder in den Siphon geführt werden. Ferner ist es möglich, mit den offenen Greifern in den Siphon hineinzufahren, um dort hängengebliebene Teile, gegebenenfalls auch Reinigungsteile, wider zu erfassen, wozu dann lediglich ein Zug am Schiebeteil auszuüben ist.

Vorstehend sind die erfindungsgemäßen Merkmale vielfach am Beispiel eines Toiletten-Reinigungsgerätes näher erläutert worden. Die erfindungsgemäße Ausbildung kann aber selbstverständlich auch für jede andere Art von Arbeitsgerät, beispielsweise für Reinigungszwecke im Küchenbereich, eingesetzt werden, wie aber auch zum Auftragen von Medien auf Oberflächen oder auch zum Bearbeiten von Oberflächen mit polierenden oder schleißenden Arbeitsteilen.

Nachstehend ist die Erfindung anhand mehrerer in der Zeichnung wiedergegebender Ausführungsbeispiele beschrieben. In der Zeichnung zeigen:
- Figur 1:: einen Längsschnitt durch eine erste Ausführungsform des Halters in der Öffnungsstellung;
- Figur 2:: den Halter gemäß Figur 1 in der Schließstellung;
- Figur 3:: den Halter gemäß Figur 1 in einer anderen Öffnungsstellung,
- Figur 4:: eine perspektivische Ansicht des Halters gemäß Figuren 1 bis 3 während des Gebrauchs und
- Figur 5:: eine perspektivische Ansicht eines Ständers für einen Halter und einen Stapel flächiger Arbeitsteile.

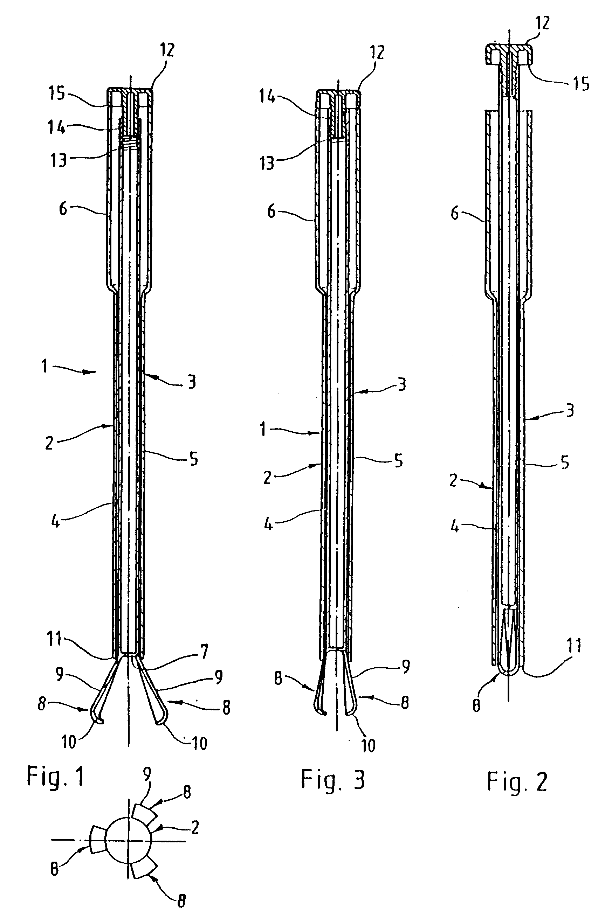

Bei der in den Figuren 1 bis 4 gezeigten Ausführungsform handelt es sich um ein stabförmiges Arbeitsgerät, das beispielsweise zur Toilettenreinigung anstelle herkömmlicher Toilettenbürsten verwendet werden kann. Das Arbeitsgerät wird von einem Halter 1 gebildet, der aus einer äußeren Hülse 2 und einem darin geführten Schiebeteil 3 besteht. Die Hülse 2 ist von einem Rohr 4 gebildet und ebenso besteht das Schiebeteil 3 beim gezeigten Ausführungsbeispiel aus einem Rohr 5. Die Rohre 4 und 5 der Hülse 2 bzw. des Schiebeteils 3 weisen auf dem größten Teil ihrer Länge eine solche Anpassung ihrer Durchmesser auf, daß das Schiebeteil 3 satt in dem Rohr 4 gleitet. Im oberen Teil ist das die Hülse 2 bildende Rohr 4 zu einem Rohrabschnitt 6 größeren Durchmessers erweitert, das als Griffstück für das Arbeitsgerät dient.

Das Schiebeteil 3 ist an seiner unteren Stirnseite 7 verschlossen. Im Bereich dieser verschlossenen Stirnseite weist das Schiebeteil 3 Greifer 8 auf, die entweder mit dem Rohr 5 einstückig oder aber als gesonderte Teile mit diesem verbunden sind. Die Greifer 8 sind federnd ausgebildet oder am Rohr 5 federnd angebracht, so daß sie sich in der unteren Stellung des Schiebeteils 3 nach außen spreizen, wie dies in Figur 1 gezeigt ist.

Die Greifer 8 bestehen aus im wesentlichen geraden Greiferarmen 9 und daran ansetzende, beim gezeigten Ausführungsbeispiel bogenförmig nach innen abgerundeten Klauen 10, die in der gezeigten Öffnungsstellung nach innen und unten weisen. Beim Verschieben des Schiebeteils 3 innerhalb der Hülse 2 nach oben gleiten die Greiferarme 9 an der offenen Stirnseite 11 der Hülse entlang, so daß sich die Klauen 10 aufeinander zubewegen und schließlich die in Figur 2 gezeigte Schließstellung einnehmen. Wie in der Draufsicht zu Figur 1 gezeigt ist, sind insgesamt drei Greifer 8 vorgesehen, die um jeweils 120 ° versetzt und so ausgebildet sind, daß sie in der Schließlage (Figur 2) einen annähernd geschlossenen Greiferkörper bilden.

Am oberen Ende des Schiebeteils 3 sitzt eine Kappe 12, die als Handhabe dient. Sie ist beim gezeigten Ausführungsbeispiel mittels eines Gewindezapfens 13 in ein Innengewinde am oberen Ende 14 des Rohrs 5 eingeschraubt. Die Kappe 12 liegt in der Öffnungsstellung (Figur 1) mit ihrem unteren Rand 15 auf der oberen Stirnseite des Rohrabschnittes 6 auf. Durch Verdrehen der Kappe 12 läßt sich die Gesamtlänge des Schiebeteils verändern, insbesondere läßt sich der Öffnungswinkel der Greifer 8 einstellen, wie dies in Figur 3 anhand eines kleineren Öffnungswinkels gezeigt ist.

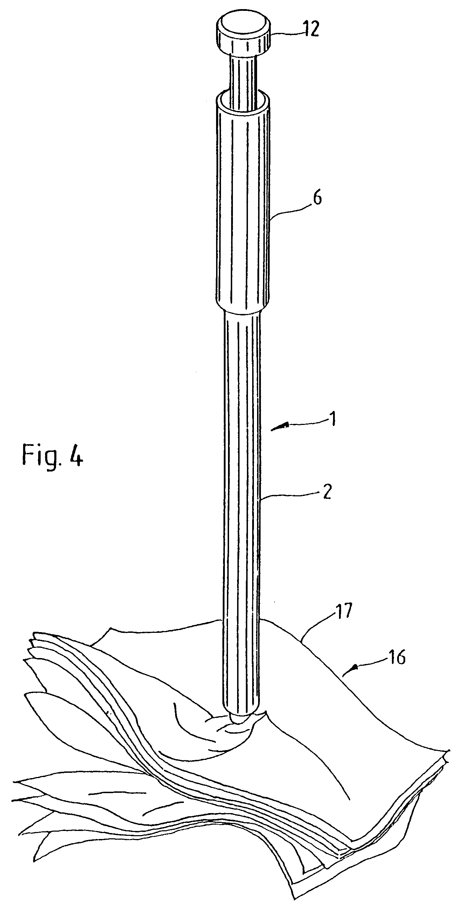

Das in den Figuren 1 bis 3 gezeigte Arbeitsgerät dient zur Aufnahme von Arbeitsteilen 16, die flächig ausgebildet sind. Beispielsweise handelt es sich, wie in Figur 4 gezeigt, um Reinigungstücher 17, die auf einem Stapel angeordnet sind. Der Halter 1 wird in der in Figur 1 gezeigten Öffnungsstellung der Greifer 8 auf den Stapel aufgesetzt und mittels der am Rohrabschnitt 6 der Hülse 2 angreifenden Hand an den Stapel angedrückt, wobei die bogenförmigen Klauen 10 zumindest das obere Tuch 17 des Stapels ergreifen und im Bereich zwischen sich nach innen und oben falten, so daß nach Erreichen der Schließstellung gemäß Figur 2 und 4 das obere Tuch 17 vom Stapel abgenommen werden kann. Nach Beendigung des Reinigungsvorgangs drückt der Benutzer auf die Kappe 12 und drückt das Schiebeteil 3 nach unten, so daß das verschmutzte Tuch ausgeworfen wird.

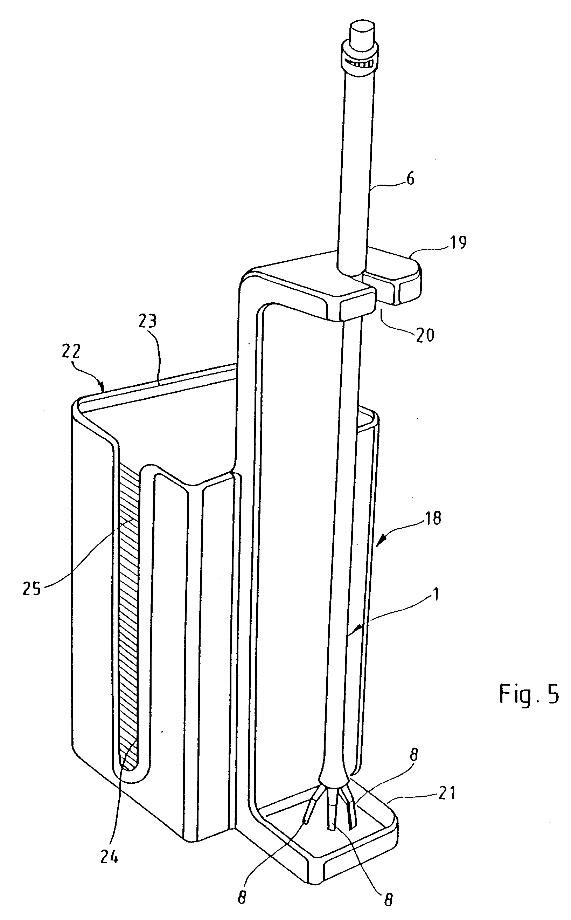

In Figur 5 ist wiederum der Halter 1 gezeigt, der in einen Ständer 18 eingehängt ist. Der Ständer 18 weist zu diesem Zweck eine obere Konsole 19 mit einem Schlitz 20 auf, in den der Halter 1 bzw. die Hülse 2 eingesetzt werden derart, daß der erweiterte Griffsabschnitt 6 sich mit seinem unteren Ende auf der Oberseite der Konsole 19 abstützt. Der Ständer 18 weist ferner an der Unterseite eine Tropfschale 21 auf um evtl. von den Greifern 8 abtropfende Flüssigkeit aufzunehmen.

Ferner weist der Ständer 18 ein Behältnis 22 auf, das an seiner oberen Stirnseite 23 offen ist und an seiner einen Wand einen bis in Bodennähe reichenden Schlitz 24 besitzt. Das Behältnis 22 dient zur Aufnahme eines Stapels 25 von Reinigungstüchern.

## Patentansprüche

1. Arbeitsgerät zum Reinigen oder Bearbeiten von Oberflächen oder zum Auftragen von Medien auf Oberflächen mit einem Halter (1) und einem von diesem auswechselbar ergriffenen, verformbaren Wegwerf-Arbeitsteil (16), wobei der Halter aus einer als Stiel oder Griff ausgebildeten Hülse (2) und einem darin geführten Schiebeteil (3) besteht, das an seinem oberen die Hülse überragenden Ende eine Handhabe (12) und an seinem unteren Ende Greifer (8) für das Arbeitsteil aufweist, die aus einer die Hülse überragenden, gespreizten Öffnungsstellung, in der sie ausschließlich durch Aufsetzen auf das Arbeitsteil (16) und Andrücken mittels der Hülse (2) das Arbeitsteil erfassen, unter Verformen desselben in dem gefaßten Bereich in eine das Arbeitsteil (16) fixierende Gebrauchslage und mittels der Handhabe (12) in umgekehrter Richtung zur Freigabe des Arbeitsteils verschiebbar sind, wobei die Handhabe mit dem oberen Ende der Hülse (2) einen Anschlag bildet und die gespreizte Öffnungsstellung der Greifer (8) bestimmt, dadurch gekennzeichnet, daß der Halter (1) ausschließlich aus der Hülse (2) und dem Schiebeteil (3) besteht und daß die Handhabe (12) auf dem Schiebeteil (3) zur Einstellung der Öffnungsweite der Greifer (8) in der Öffnungsstellung axial verstellbar ist.

2. Arbeitsgerät nach Anspruch 1, dadurch gekennzeichnet, daß die Greifer (8) beim Andrücken mittels der Hülse (2) das vorzugsweise flächige Arbeitsteil (16) zwischen sich faltend zusammenschieben und die Falten in den Raum zwischen sich verdrängen.

3. Arbeitsgerät nach Anspruch 1 oder 2, dadurch gekennzeichnet, daß wenigstens drei Greifer (8) vorgesehen sind, die mit einem Bogenwinkel von jeweils 120° versetzt sind.

4. Arbeitsgerät nach einem der Ansprüche 1 bis 3, dadurch gekennzeichnet, daß die Greifer (8) federnd ausgebildet und durch Einschieben in die Hülse (2) mittels des Schiebeteils (3) aus der Öffnungsstellung in die Gebrauchslage bewegbar sind.

5. Arbeitsgerät nach einem der Ansprüche 1 bis 4, dadurch gekennzeichnet, daß die Greifer (8) aus einem bei ihrer Bewegung an der Innenwandung der Hülse (2) geführten Greifarm (9) und nach innen oder außen gerichteten Klauen (10) bestehen.

6. Arbeitsgerät nach einem der Ansprüche 1 bis 5, dadurch gekennzeichnet, daß die Klauen (10) so ausgebildet sind, daß die freien Enden in ihrer Öffnungsstellung nach unten weisen.

7. Arbeitsgerät nach einem der Ansprüche 1 bis 6, dadurch gekennzeichnet, daß die Klauen (10) so ausgebildet sind, daß ihre Enden in ihrer Gebrauchslage annähernd horizontal angeordnet sind.

8. Arbeitsgerät nach einem der Ansprüche 1 bis 7, dadurch gekennzeichnet, daß die Klauen (10) bogenförmig ausgebildet sind.

9. Arbeitsgerät nach einem der Ansprüche 1 bis 8, dadurch gekennzeichnet, daß die wenigstens drei Greifer (8) so ausgebildet sind, daß sie aus einer gespreizten Öffnungsstellung in eine geschlossene Gebrauchslage bewegbar sind, in der sie über die gesamte Greiferlänge einen annähernd geschlossenen Greiferkopf bilden.

10. Arbeitsgerät nach einem der Ansprüche 1 bis 9, dadurch gekennzeichnet, daß die Hülse (2) aus einem Rohr (4) und das Schiebeteil (3) aus einem darin satt anliegend geführten Rohr (5) gebildet ist, das an seinem einen Ende verschlossen ist, an dem wiederum die Greifer (8) angesetzt sind.

11. Arbeitsgerät nach Anspruch 10, dadurch gekennzeichnet, daß das die Hülse (2) bildende Rohr (4) an seinem oberen Ende zu einem Griffrohr (6) erweitert ist.

12. Arbeitsgerät nach einem der Ansprüche 1 bis 11, dadurch gekennzeichnet, daß das Schiebeteil (3) eine das Griffrohr (6) übergreifende Kappe (12) als Handhabe aufweist.

13. Arbeitsgerät nach einem der Ansprüche 1 bis 12, dadurch gekennzeichnet, daß an der Hülse außenseitig Widerlager für die Finger angeordnet sind.

14. Arbeitsgerät nach einem der Ansprüche 1 bis 13, dadurch gekennzeichnet, daß die Hülse (2) und das Schiebeteil (3) zumindest auf einem unteren Teil ihrer Länge quer zu ihrer Achse biegsam sind.

## Claims

1. Device for cleaning or treating surfaces or for applying substances to surfaces with a holder (1) and a deformable disposable working part (16) interchangeably gripped by the latter, the holder comprising a sleeve (2) constructed as a stick or grip and a sliding part (3) guided therein and which has on its upper end projecting over the sleeve a handle (12) and on its lower end grippers (8) for the working part, which are displaceable from a spread open position projecting over the sleeve and in which they grip the working part exclusively by engagement on said working part (16) and pressing by means of the sleeve (2), accompanied by the deformation thereof in the held area, into a use position fixing the working part (16) and by means of the handle (12) in the reverse direction for the release of the working part, the handle forming with the upper end of the sleeve (2) a stop and determines the spread open position of the grippers (8), characterized in that the holder (1) exclusively comprises the sleeve (2) and the sliding part (3) and that the handle (12) on the sliding part (3) is axially adjustable for setting the opening width of the grippers (8) in the open position.

2. Device according to claim 1, characterized in that on pressing by means of the sleeve (2) slide together between them in folding manner the preferably flat working part (16) and displace the folds into the space between them.

3. Device according to claim 1 or 2, characterized in that there are at least three grippers (8), which are offset by an arc angle of in each case 120°.

4. Device according to one of the claims 1 to 3, characterized in that the grippers (8) are resiliently constructed and by inserting the sleeve (2) by means of the sliding part (3) are movable from the open position into the use position.

5. Device according to one of the claims 1 to 4, characterized in that the grippers (8) comprise a gripping arm (9) guided during their movement on the inner wall of the sleeve (2) and inwardly or outwardly directed claws (10).

6. Device according to one of the claims 1 to 5, characterized in that the claws (10) are constructed in such a way that the free ends are directed downwards in their open position.

7. Device according to one of the claims 1 to 6, characterized in that the claws (10) are constructed in such a way that their ends are located approximately horizontally in the use position.

8. Device according to one of the claims 1 to 7, characterized in that the claws (10) are arcuate.

9. Device according to one of the claims 1 to 8, characterized in that the at least three grippers (8) are constructed in such a way that they are movable from a spread open position into a closed use position, in which they form an approximately closed gripper head over the entire gripper length.

10. Device according to one of the claims 1 to 9, characterized in that the sleeve (2) is formed by a tube (4) and the sliding part (3) from a tube (5) guided therein in snugly engaging manner and which at its one end is closed and on which are once again attached the grippers (8).

11. Device according to claim 10, characterized in that the tube (4) forming the sleeve (2) is widened at its upper end to a gripping tube (6).

12. Device according to one of the claims 1 to 11, characterized in that the sliding part (3) has a cap (12) engaging over the gripping tube (6) as a handle.

13. Device according to one of the claims 1 to 12, characterized in that abutments are externally provided for the fingers on the sleeve.

14. Device according to one of the claims 1 to 13, characterized in that at least on a lower part of their length, the sleeve (2) and the sliding part (3)) are flexible transversely to their axis.

## Revendications

1. Instrument de travail pour le nettoyage ou la finition de surfaces ou pour appliquer des produits sur des surfaces, comprenant un support (1) et une pièce de travail (16) jetable et déformable, saisie et remplacée par le support, celui-ci étant composé d'un fourreau (2) en forme de manche ou de poignée et d'un coulisseau (3) guidé à l'intérieur du fourreau et présentant à son extrémité supérieure dépassant du fourreau un embout (12) et à son extrémité inférieure des branches (8) pour la pièce de travail, guidées d'une position d'ouverture dans laquelle elles sont écartées et dépassent du fourreau, position dans laquelle elles saisissent la pièce (16) uniquement par positionnement sur celle-ci et pression exercée par l'intermédiaire du fourreau (2), vers une position d'utilisation au cours de laquelle la pièce (16) est maintenue, après avoir été déformée dans la zone de préhension, et inversement est libérée par action sur l'embout (12), celui-ci venant en butée avec l'extrémité supérieure du fourreau (2) et déterminant la position d'ouverture dans laquelle les branches (8) sont écartées, caractérisé en ce que le support (1) se compose uniquement du fourreau (2) et du coulisseau (3) et en ce que l'embout (12) est déplaçable axialement sur le coulisseau (3) pour le réglage de l'écartement des branches (8) dans leur position d'ouverture.

2. Instrument de travail selon la revendication 1, caractérisé en ce que, lors de la pression à l'aide du fourreau (2), les branches (8) resserrent la pièce (16), de préférence de forme plate, en la pliant et en l'introduisant dans l'espace qui les sépare.

3. Instrument selon l'une quelconque des revendications 1 ou 2, caractérisé en ce qu'au moins trois branches (8) sont prévues, disposées à 120 degrés.

4. Instrument selon l'une quelconque des revendications 1 à 3, caractérisé en ce que les branches (8) sont élastiques et passent de la position d'ouverture à la position d'utilisation par introduction dans le fourreau (2) à l'aide du coulisseau (3).

5. Instrument selon l'une quelconque des revendications 1 à 4, caractérisé en ce que les branches (8) se composent d'un bras guidé par la paroi intérieure du fourreau (2) lors de leur déplacement le long de celui-ci, et de grilles dirigées vers l'extérieur ou l'intérieur.

6. Instrument selon l'une quelconque des revendications 1 à 5, caractérisé en ce que les griffes (10) sont conformées de façon que dans la position d'ouverture, les extrémités libres sont dirigées vers le bas.

7. Instrument selon l'une quelconque des revendications 1 à 6, caractérisé en ce que les griffes (10) sont conformées de façon que dans la position d'utilisation, leurs extrémités sont sensiblement horizontales.

8. Instrument selon l'une quelconque des revendications 1 à 7, caractérisé en ce que les griffes (10) sont courbées.

9. Instrument selon l'une quelconque des revendications 1 à 8, caractérisé en ce que les branches (8), au minimum au nombre de trois, sont conformées de façon qu'elles passent d'une position d'ouverture avec écartement à une position fermée d'utilisation, dans laquelle elles forment une tête de préhension presque fermée sur toute leur longueur.

10. Instrument selon l'une quelconque des revendications 1 à 9, caractérisé en ce que le fourreau (2) se compose d'un tube (4) et en ce que le coulisseau (3) se compose d'un tube (5) coulissant sans jeu dans le fourreau (2) et fermé à l'une de ses extrémités, à laquelle sont fixées les branches (8).

11. Instrument selon la revendication 10, caractérisé en ce que le tube (4) formant le fourreau (2) est évasé à sa partie supérieure pour former une poignée (6).

12. Instrument selon l'une quelconque des revendications 1 à 11, caractérisé en ce que le coulisseau (3) comporte un embout (12) dépassant de la poignée (6) et servant au maniement.

13. Instrument selon l'une quelconque des revendications 1 à 12, caractérisé en ce que le fourreau (2) présente à l'extérieur des aspérités pour les doigts.

14. Instrument selon l'une quelconque des revendications 1 à 13, caractérisé en ce que le fourreau (2) et le coulisseau (3) sont flexibles radialement au moins sur une partie inférieure de leur longueur.
